# EUROPÄISCHE PATENTSCHRIFT

(11) **EP 1 133 435 B1**
(45) Veröffentlichungstag und Bekanntmachung des Hinweises auf die Patenterteilung: **16.10.2002**
(21) Anmeldenummer: 99964351.3
(22) Anmeldetag: 19.11.1999
(51) Int. Cl.: B65D 81/32

(54) **MISCHKAPSEL**
MIXER CAPSULE
CAPSULE MELANGEUSE

(30) Priorität: 26.11.1998 DE 29821193 U
(43) Veröffentlichungstag der Anmeldung: 19.09.2001
(73) Patentinhaber: 3M Espe AG, 82229 Seefeld (DE)
(72) Erfinder: PEUKER, Marc, D-82229 Seefeld (DE); STENGER, Angela, D-82031 Grünwald (DE); HARTUNG, Martin, D-81541 München (DE); HAGER, Gabriele, D-86157 Augsburg (DE)
(86) Internationale Anmeldenummer: DE9903701
(87) Internationale Veröffentlichungsnummer: WO00030953

(56) Entgegenhaltungen:
- EP-A- 0 783 872
- DE-A- 3 635 574
- DE-A- 3 920 537
- DE-U- 9 303 268
- US-A- 2 487 236
- US-A- 3 888 113

## Beschreibung

Die vorliegende Erfindung betrifft eine Mischkapsel gemäß dem Oberbegriff des Anspruchs 1 und ein eine Mischkapsel enthaltendes Mischgerät gemäß Anspruch 14, insbesondere zur Herstellung eines Dentalwerkstoffs.

Zur Herstellung von Gemischen aus zwei oder mehr Komponenten dienen Mischkapseln, die vom Hersteller mit den Komponenten in voneinander getrennten Kammern befüllt werden. Vom Anwender werden die Komponenten, etwa durch Zerstörung einer die Kammer trennenden Wand in Verbindung gebracht und miteinander gemischt.

Im Dentalbereich sind Mischkapseln zur Herstellung von Dentalwerkstoffen bekannt, die häufig aus einer pulverförmigen und einer flüssigen Komponente gemischt werden, wobei der Mischvorgang üblicherweise in einem Schüttelgerät erfolgt. Die fertiggemischte Substanz wird dann durch eine an der Mischkapsel angeformte Ausbringtülle direkt auf die Arbeitsstelle, etwa in eine Zahnkavität, ausgebracht.

Aus DE 36 35 574 ist eine Mischkapsel bekannt, die zur Herstellung von Verfugungs- und Abdichtmassen gedacht ist. Bei einem in diesem Dokument beschriebenen Ausführungsbeispiel ist eine in dem Ausbringkolben vorhandene Nebenkammer, auf der der Hauptkammer der Kapsel zugewandten Seite von einer Folie und auf der entgegengesetzten Seite von einem in dem Ausbringkolben verschiebbar angeordneten Hilfskolben begrenzt. Im Ausgangszustand der Mischkapsel ist in der Nebenkammer außer der zweiten Komponente ein Mischkörper untergebracht, der zunächst durch manuelle Verschiebung des Hilfskolbens zur Zerstörung der Folie dient und anschließend den Mischvorgang unterstützt. Um die zum Verschieben des inneren Kolbens samt Kugel erforderliche Volumenverkleinerung zu ermöglichen, ist in der Mischkammer ein Gaskissen vorgesehen.

Bei einer weiteren Ausführungsform der bekannten Mischkapsel befindet sich die Mischkugel zunächst in der Hauptkammer. In diesem Fall ist die in dem Kolben vorhandene Nebenkammer gegenüber der Hauptkammer durch einen Deckel und auf ihrer Rückseite durch einen Balg verschlossen. Durch manuellen Druck auf den Balg wird der Deckel vom Kolben weggedrückt, so daß die beiden Kammern zur Aktivierung der Kapsel in Verbindung gebracht werden.

In beiden Fällen ist zur Aktivierung der Kapsel ein eigener manuell durchzuführender Arbeitsschritt erforderlich. Weiterhin wird ein Gaskissen benötigt, um die zum Lösen des Deckels erforderliche Volumenverkleinerung zu ermöglichen.

Bei einer aus DE 94 00 374 U1 bekannten Mehrkomponenten-Mischkapsel für Dentalzwecke ist eine erste Komponente in einer Mischkammer und eine zweite, flüssige Komponente in einem Folienbeutel enthalten, der in einer von der Mischkammmer durch ein verschiebbares Wandelement getrennten Nebenkammer angeordnet ist. Ein in der Mischkammer vorhandener zylindrischer Mischkörper dient dazu, am Beginn des Mischvorgangs das Wandelement zu verschieben und dadurch den Folienbeutel zusammenzupressen, so daß dieser aufplatzt und die flüssige Komponente durch einen in dem Wandelement vorhandenen Flüssigkeitsdurchlaß freigibt.

Eine Schwierigkeit bei dieser Vorrichtung besteht darin, das Wandelement, den Folienbeutel und die Kapsel selbst so zu gestalten und mit derart geringen Toleranzen zu dimensionieren, daß das Wandelement zwar im Lager- und Transportzustand der Kapsel in seiner Ausgangsstellung festgehalten wird, unter Einwirkung des Mischköpers jedoch so weit und mit solcher Kraft verschoben wird, daß der Folienbeutel aufplatzt. Dabei ist zu berücksichtigen, daß eine oftmals nur teilweise erfolgende Entleerung des Folienbeutels zu unerwünschten Änderungen im Mischungsverhältnis und damit zu Verschlechterungen in den Eigenschaften des fertigen Gemisches führt. Nachteilig ist auch, daß sich diese Anordnung nur zum Anmischen, nicht aber auch zum Applizieren der Paste eignet.

In DE 93 03 268 U1 ist eine Mehrkomponenten-Mischkapsel mit Ausspritzeinrichtung für eine gemischte Masse, vornehmlich für Dentalzwecke beschrieben. Diese Mischkapsel weist einen im Inneren der Kapsel gelegenen Aktivierungsdorn auf, der über Halterungen im Inneren des Kapselkörpers gegen die Richtung des Auspressens verankert ist, sowie ein im Inneren eines Stempels untergebrachtes Flüssigkeitskompartiment, das gegen den Aktivierungsdorn mit einer zerstörbaren Membran abgedichtet ist. Der Aktivierungsdorn ist bündig in den leeren Behälter im Inneren des Stempels eingepaßt und dichtet diesen während des Auspressens ab. Während des Auspressens in Längsrichtung gelangt dabei die Flüssigkeit durch die dünne Kapillare, die im Inneren des Aktivierungsdorns zu liegen kommt, in den Mischraum. Es wird ausgeführt, daß auch während des Mischvorgangs in einem Vibrationsmischer und während des Ausbringens der Masse über die Ausspritzdüse stets ein kleiner, nicht exakt reproduzierbarer Flüssigkeitsrest in der Kapillare verbleibt. Dies beinträchtigt die Qualität des Mischungsergebnisses.

Der vorliegenden Erfindung liegt folglich die Aufgabe zugrunde, eine verbesserte Mischkapsel bereitzustellen, die die vorgenannten Probleme vermeidet, ohne das gewünschte Mischungsergebnis zu beeinträchtigen.

Diese Aufgabe wird durch eine Mischkapsel und ein diese Mischkapsel enthaltendes Mischgerät gelöst, wie es in den Ansprüchen beschrieben wird. Die erfindungsgemäße Mischkapsel weist dabei u.a. folgende Vorteile auf: Der in der Mischkapsel vorhandene bewegliche Körper dient nicht nur zum Aktivieren der Kapsel unter Zerstörung der Trennvorrichtung und zur Unterstützung des Mischvorgangs sondern auch als Verdrängungskörper bei der Entleerung.

Da sich der Körper im Ausgangszustand in der Hauptkammer befindet, erfolgt die Aktivierung vorzugsweise automatisch zu Beginn des Mischvorgangs, im Gegensatz zu den aus dem Stand der Technik bekannten manuell durchzuführenden Aktivierungen.

Da ferner die Nebenkammer von der Hauptkammer durch die von dem Körper durchschlagbaren Trennvorrichtung getrennt ist, bildet sie beim anschließenden Mischvorgang einen Teil der Mischkammer selbst. Dadurch ist gewährleistet, daß die in der Nebenkammer enthaltende zweite Komponente vollständig in das entstehende Gemisch eingeht.

Zudem führt die Vereinigung von Haupt- und Nebenkammer zu einer vorteilhaften Vergrößerung des zur Verfügung stehenden Mischvolumens.

In der letzten Phase des Ausbringvorgangs unterstützt der Körper die nahezu vollständige Entleerung des von Hauptkammer und Nebenkammer gebildeten Innenraums der Mischkapsel.

Weiterhin vorteilhaft ist die geringe Anzahl und einfache Gestaltung der Bauteile der Mischkapsel.

Vorzugsweise ist der bewegliche Körper kugelförmig ausgestaltet. Der Durchmesser der Kugel liegt vorzugsweise im Bereich von 4-10 mm, besonders bevorzugt im Bereich von 5-8 mm.

Das Gewicht des beweglichen Körpers ist dabei derart auf die Beschaffenheit der Trennvorrichtung eingestellt, daß die Trennvorrichtung bei herkömmlichem Transport und normaler Handhabung durch den beweglichen Körper nicht beschädigt wird. Erst ab in Kapsel-Mischgeräten üblich auftretenden Beschleunigungswerten von beispielsweise 100-500 g (1g = 9.81 ms⁻²), vorzugsweise 200-400 g kann die Trennvorrichtung durchschlagen werden.

Die Form der Nebenkammer hat vorzugsweise im wesentlichen die Form einer Halbkugel mit einem gegenüber dem Körper etwas größeren Radius. Dies ist für eine möglichst restlose Entleerung der Mischkapsel günstig.

Vorteilhaft ist es, wenn die Trennvorrichtung an einer die Nebenkammer begrenzenden Ringfläche des Kolbens haftet und der Übergang zwischen der Ringfläche und der Innenwand der Nebenkammer einen scharfkantigen Bereich aufweist.

Dieser scharfkantige Bereich verläuft vorzugsweise über einen Teil des Umfangs, vorzugsweise im wesentlichen von 60° - 120°, besonders bevorzugt von 70° - 90°. Der Übergang zwischen Ringfläche und der Innenwand der Nebenkammer ist vorzugsweise im übrigen Bereich verrundet. Diese Ausführungsform vermeidet das vollständige Abreißen der Folie.

In einer besonderen Ausführungsform weist die Trennvorrichtung eine Sollbruchstelle auf, die zu einem gezielten und sicheren Öffnen der Nebenkammer beiträgt. Die Vorschädigung der Trennvorrichtung bzw. die Präparierung einer Sollbruchstelle kann beispielsweise durch Strahlung wie Laserstrahlung, mechanisch durch Anritzen oder Einschneiden mit einem Messer oder thermisch durch Anschmelzen oder Einritzen mit einem beheizbaren Messer erfolgen.

Die Präparierung wird vorzugsweise nur am gegebenenfalls vorhandenen Kunststoffteil der Trennvorrichtung, d.h. an dem auf einer oder auch auf beiden Seiten einer Metallschicht oder SiOₓ-haltigen Schicht vorhandenen Trägermaterial vorgenommen. Damit bleibt die Dichtigkeit der gegebenenfalls vorhandenen Metall- oder SiOₓ-haltigen Schicht erhalten.

Die Form der Präparierung ist dabei beliebig, erfolgt aber vorzugsweise in einer Form, die ein Abreißen der Trennvorrichtung oder Teilen davon nach oder beim Durchschlagen der Trennvorrichtung durch den Körper vermeidet. Ein Präparieren der Trennvorrichtung in der Form von zwei oder mehr sich in der Symmetrieachse der Kapsel kreuzenden Linien hat sich als günstig erwiesen.

In diesem Fall platzt die Trennschicht nur an einer definierten Stelle auf. Dadurch wird vermieden, daß die Trennschicht oder Teile davon in das Gemisch gelangen und den Ausbringvorgang behindern.

Ein weiterer Vorteil einer so erzeugten Sollbruchstelle besteht darin, daß auch verhältnismäßig dicke Folien im Bereich von 50-80 µm, vorzugsweise 60-70 µm mit geringer Kraft (kleinere Masse des Körpers) durchstoßen werden können.

Die Trennvorrichtung liegt vorzugsweise in Form einer ein- oder mehrlagigen Folie, besonders bevorzugt in Form einer Verbundfolie oder auch Siegelfolie vor. Die Folie umfaßt vorzugsweise mindestens eine Metallschicht wie z.B. eine Aluminiumschicht und mindestens eine, gegebenenfalls zwei, drei oder mehrere Kunststoffschichten.

Als Kunststoff sind beispielsweise geeignet: PE, PP, PET, PTFE, PVC, Polyamide.

Ferner kann die Trennvorrichtung anstelle oder zusätzlich zur Metallfolie plasmapolymerisierte Schichten wie kohlenwasserstoff-haltige Schichten oder keramische Barriereschichten wie SiOₓ-Schichten aufweisen.

Die Trennvorrichtung wird beispielsweise durch Heißsiegeln, Kleben, Ultraschallverschweißen oder Hochfrequenzschweißen an der ringförmigen Stirnfläche des Kolbens befestigt.

Die Trennvorrichtung kann ferner zur Aufnahme einer dritten Komponente beispielsweise in Form eines Folienkissens ausgebildet sein.

Vorteilhafte Werkstoffe für den Kolben der Mischkapsel umfassen Metalle, wie eloxiertes Aluminium, Glas, Keramik wie Zirkonoxid, Kunststoffe und/oder - zur Verringerung der Durchlässigkeit - gegebenenfalls metallisierte oder mit anderen Materialien, die Sperrschichtwirkung haben, bedampfte oder beschichtete Kunststoffe. Als Kunststoffe sind beispielsweise möglich: PE, PP, PET, PTFE, PVC, EVA, Polyamide.

Weiterhin sind Kombinationen der vorgenannten Materialien wie ein Metallinsert, vorzugsweise aus Aluminium, denkbar, das mit dem Kunststoff äußerlich und innerlich umgeben ist. Derartige Teile sind im Spritzgußverfahren herstellbar.

Der Kolben kann in einem 2-Komponenten Spritzgußverfahren hergestellt werden. Hierbei wird beispielsweise zunächst ein Inlay gefertigt, das anschließend mit beispielsweise PE umspritzt wird.

Für den Körper der Mischkapsel sind Kunststoffe mit hoher Dichte wie PTFE, Glas, Keramik, etwa Zirkonoxid, Metalle gegebenenfalls kunststoffbeschichtet oder Edelstahl geeignet.

Die in der Hauptkammer, der Nebenkammer und/oder der gegebenenfalls in der Trennvorrichtung enthaltenden Komponenten umfassen sowohl Flüssigkeiten als auch Feststoffe vorzugsweise in Pulverform. Möglich sind aber auch pastenförmige Grundsubstanzen.

Die Feststoffe umfassen inerte Füllstoffe wie feingemahlenen Quarz, SiOₓhaltige Substanzen, Gläser als auch oberflächenmodifizierte, reaktive Füllstoffe.

Die Flüssigkeiten umfassen insbesondere matrixbildende, polymerisierbare Substanzen, beispielsweise Polysäuren umfassend Acrylsäure-, Methacrylsäure- und Maleinsäurederivate sowie Copolymere davon.

Die Ausbringtülle an der Mischkapsel setzt gegebenenfalls exzentrisch an der Hauptkammer an. Von Vorteil kann auch die Ausbildung einer oder mehrerer Rinnen sein, die in die Ausbringtülle münden. Eine derartige Ausgestaltung kann für eine ungestörte Entleerung der Mischkapsel günstig sein.

Die Ausbringtülle ist ferner vorzugsweise verschließbar ausgestaltet. Denkbare Ausführungsformen sind beispielsweise in der EP-A-0 157 121 beschrieben, wo die Ausbringtülle schwenkbar gelagert ist, so daß je nach Stellung der Ausbringtülle diese verschlossen oder geöffnet ist. Ebenfalls denkbar ist die Verwendung einer Rüsselverdrängungskappe zum Verschließen der Ausbringtülle.

Bevorzugte Ausführungsbeispiele der Mischkapsel werden nachstehend anhand der Zeichnungen erläutert.
Figur 1 zeigt einen Längsschnitt durch eine Mischkapsel im Ausgangszustand,
Figur 2 die gleiche Kapsel am Ende des Ausbringvorgangs und
Figur 3 eine der Figur 1 ähnliche Darstellung in einer anderen Ausführungsform.

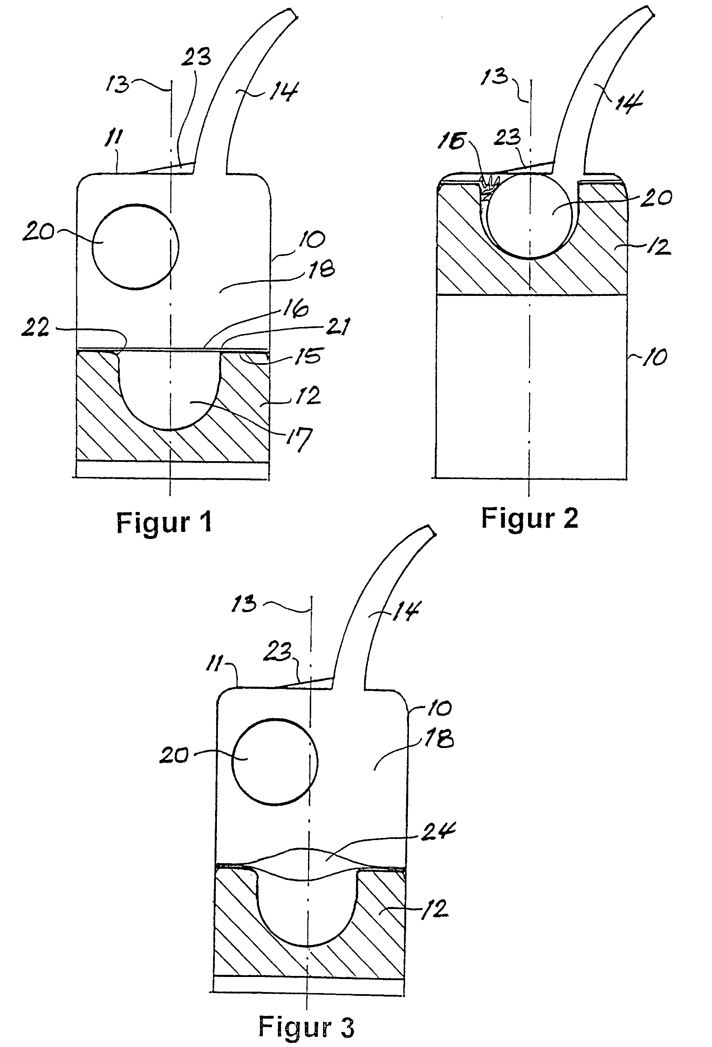

Gemäß Figur 1 besteht die Mischkapsel aus einer zylinderischen Kartusche 10, die an ihrem vorderen Ende durch eine Stirnwand 11 und and ihrem hinteren Ende durch einen Kolben 12 verschlossen ist. An der Stirnwand 11 ist eine gekrümmte Ausbringtülle 14 exzentrisch zur Kartuschenachse 13 angeformt. Die Ausbringtülle 14 ist gegebenenfalls verschließbar ausgebildet, beispielsweise mit einem Verdrängungsstopfen.

Der Kolben 12 hat eine axiale wesentliche Wandstärke und ist mit einer zur Kartuschenachse 13 koaxialen, im wesentlichen halbkugelförmigen Vertiefung versehen, die durch eine an der ringförmigen vorderen Stirnfläche 15 des Kolbens 12 befestigten Trennvorrichtung 16 verschlossen ist. Die Trennvorrichtung 16 trennt die von der Vertiefung gebildeten Nebenkammer 17 vom übrigen Innenraum der Kartusche, der hier als Hauptkammer 18 bezeichnet wird.

Im Ausgangs- und/oder Lagerzustand enthält die Hauptkammer 18 eine erste, beispielsweise pulverförmige Komponente und die Nebenkammer 17 eine zweite, beispielsweise flüssige Komponente des herzustellenden Gemisches.

Die Mischkapsel enthält ferner einen frei beweglichen, vorzugsweise kugelförmigen Körper 20, der sich im Ausgangs- und/oder Lagerzustand der Kapsel in der Hauptkammer 18 befindet und dessen Radius etwas kleiner ist als der Radius der die Nebenkammer 17 bildenden halbkugelförmigen Vertiefung. Der Körper 20 und die Nebenkammer 17 können auch andere, von der Kugel- bzw. Halbkugelform abweichende Formen haben. Frei beweglich heißt, daß sich der Körper grundsätzlich in alle Richtungen bewegen läßt und nicht durch irgendwelche Führungsschienen in seiner Bewegung beeinträchtigt ist.

Der Übergang zwischen der die Nebenkammer 17 bildenden Vertiefung und der ringförmigen Stirnfläche 15 des Kolbens 12 ist, wie in Figur 1 angedeutet, über einen Winkelbereich 21 scharfkantig, im übrigen Bereich 22 verrundet, ausgebildet.

Die Scharfkantigkeit kann auch durch eine Zahnung erzeugt sein.

Die Verrundung verhindert, daß die Trennvorrichtung während des Mischvorgangs an diesem Stirnflächen-Innenrandbereich abreißt, während der scharfkantige Bereich 21 dazu dient, an der Trennvorrichtung 16 einen Initialriß auszubilden.

Ist in einer anderen Ausführung der Rand der Nebenkammer 17 durchgehend verrundet, so kann die Trennvorrichtung 16 dadurch zum Reißen gebracht werden, daß sie durch den Aufprall des Körpers 20 zu Beginn des Mischvorgangs vorzugsweise an der Sollbruchstelle überdehnt wird.

Zum Gebrauch wird die Mischkapsel, die in dem in Figur 1 dargestellten Zustand vom Hersteller geliefert wird, in ein übliches Kapsel-Mischgerät eingelegt, in dem sie beispielsweise längs der Kartuschenachse 13 in Schwingungen versetzt wird. Neben rein translatorischen Bewegungen der Kapsel sind rotatorische Bewegungen möglich, gegebenenfalls in Kombination mit translatorischen Bewegungen. Dabei trifft der Körper 20 auf die Trennvorrichtung 16 und durchschlägt sie. Dadurch werden Hauptkammer 18 und Nebenkammer 17 zu einem gemeinsamen Mischraum verbunden. In diesem Mischraum werden während des weiteren Mischvorgangs die Komponenten zusammengemischt.

Zum Ausbringen des fertigen Gemisches wird der Koben 12 in einem handelsüblichen Applikationsinstrument nach vorne verschoben bis er die in Figur 2 gezeigte Stellung erreicht.

Da die die Nebenkammer 17 bildende Vertiefung im wesentlichen halbkugelförmig ausgebildet ist und einen etwas größeren Radius hat als der kugelförmige Körper 20, tritt dieser in die Vertiefung ein und wirkt dabei als Verdrängungskörper. Dadurch kann der Mischraum im wesentlichen vollständig entleert werden.

Ist die Nebenkammer 17 zur Kartuschenachse 13 koaxial und die Ausbringtülle 14 exzentrisch angeordnet, behindert der Körper 20 den Ausbringvorgang nicht.

Um zu gewährleisten, daß auch Teile des Gemisches, die sich auf der der Ausbringtülle gegenüberliegenden Seite des Körpers 20 sammeln, in die Tülle 14 gelangen, kann in der Stirnwand 11 der Kartusche 10 mindestens eine sich in Richtung der Ausbringtülle 14 vertiefende Rinne 23 eingeformt sein. In einer weiteren (nicht gezeigten) Variante kann die Ausbringtülle 14 koaxial zur Kartuschenachse 13 angeordnet sein.

Damit der Körper 20 bei dieser Ausführungsform den Auslaß für das fertige Gemisch nicht blockiert, sind in die Stirnwand 11 der Kartusche 10 vorzugsweise mehrere Rinnen eingeformt, die in unterschiedliche Richtungen auf die Ausbringtülle 14 verlaufen.

Das in Figur 3 gezeigte Ausführungsbeispiel unterscheidet sich von dem nach Figur 1 dadurch, daß anstelle der Trennvorrichtung 16 ein aus zwei Folien bestehendes Folienkissen 24 vorgesehen ist, das eine dritte Komponente enthalten kann.

Die Unterseite des Kissens 24 kann bei einer 2-Komponenten-Variante bis auf den Kolbengrund tiefgezogen sein. Dadurch kann eine verbesserte Diffusionssperre zum Kolben erreicht werden.

Beim Beginn des Mischvorgangs durchschlägt der Körper 20 das Folienkissen 24, so daß alle drei Komponenten in dem dann zusammenhängenden, aus Hauptkammer 18 und Nebenkammer 17 gebildeten Mischraum vermischt werden können.

Wie in der Zeichnung dargestellt, weist der Koben 12 eine wesentliche Wandstärke auf. Dieses hat den Vorteil, daß der Koben 12 auch dann, wenn er aus Kostengründen aus Kunststoff gefertigt ist, eine gute Diffusionssperre darstellt.

### Bezugszeichenliste

- 10: Kartusche
- 11: Stirnwand
- 12: Kolben
- 13: Kartuschenachse
- 14: Ausbringtülle
- 15: Stirnfläche
- 16: Folie
- 17: Nebenkammer
- 18: Hauptkammer
- 20: Körper
- 21: scharfkantiger Bereich
- 22: verrundeter Bereich
- 23: Rinne
- 24: Folienkissen

## Patentansprüche

1. Mischkapsel mit einer an ihrem einen Ende mit einer Ausbringtülle (14) versehenen und an ihrem anderen Ende durch einen Kolben (12) abgedichteten Hauptkammer (18) zur Aufnahme einer ersten Komponente, einer in dem Kolben (12) vorgesehenen Nebenkammer (17) zur Aufnahme einer zweiten Komponente,
einem frei beweglichen Körper (20) und
einer die Nebenkammer (17) von der Hauptkammer (18) trennenden Trennvorrichtung (16), wobei der Körper (20) bei geschlossener Trennvorrichtung (16) in der Hauptkammer (18) angeordnet ist und die Nebenkammer (17) und der Körper (20) so gestaltet sind, daß der Körper (20) beim Ausbringvorgang als Verdrängungskörper in die Nebenkammer (17) eintreten kann, **dadurch gekennzeichnet, daß** die Trennvorrichtung (16) von dem Körper (20) durchschlagbar ausgebildet ist.

2. Mischkapsel nach Anspruch 1, wobei der Körper (20) kugelförmig ist.

3. Mischkapsel nach Anspruch 2, wobei die Nebenkammer (17) im wesentlichen die Form einer Halbkugel mit einem gegenüber dem Körper (20) größeren Radius hat.

4. Mischkapsel nach einem der vorhergehenden Ansprüche, wobei die Trennvorrichtung (16) an einer die Nebenkammer (17) begrenzenden Ringfläche (15) des Kolbens (12) haftet, und der Übergang zwischen der Ringfläche (15) und der Innenwand der Nebenkammer (17) einen scharfkantigen Bereich (21) aufweist und/oder der Übergang zwischen der Ringfläche (15) und der Innenwand der Nebenkammer (17) im übrigen Bereich (22) verrundet ist.

5. Mischkapsel nach einem der Ansprüche 1 bis 4, wobei die Trennvorrichtung (16) mindestens eine Sollbruchstelle aufweist.

6. Mischkapsel nach einem der vorhergehenden Ansprüche, wobei die Ausbringtülle (14) exzentrisch an der Hauptkammer (18) ansetzt.

7. Mischkapsel nach Anspruch 6, wobei in der mit der Ausbringtülle (14) versehenen Stirnwand der Hauptkammer (18) mindestens eine in die Ausbringtülle (14) mündende Rinne (23) ausgebildet ist.

8. Mischkapsel nach einem der vorhergehenden Ansprüche, wobei die Trennvorrichtung (16) als Kissen (24) zur Aufnahme einer dritten Komponente ausgebildet ist.

9. Mischkapsel nach einem der vorhergehenden Ansprüche, wobei die Trennvorrichtung (16) mindestens eine metallhaltige Folie und/oder kohlenwasserstoffhaltige Schichten und/oder keramische Barriereschichten wie SiOₓ-Schichten umfaßt.

10. Mischkapsel nach einem der vorhergehenden Ansprüche, wobei der Kolben (12) Materialien gewählt aus Metall, Glas, Keramik oder Kunststoff umfaßt, beispielsweise kunststoffbeschichtetes Metall, Glas und Keramik oder metallisierten Kunststoff.

11. Mischkapsel nach einem der vorhergehenden Ansprüche, wobei der Körper (20) Materialien gewählt aus Glas, Keramik, PTFE, beispielsweise kunststoffbeschichtetem Metall oder Edelstahl umfaßt.

12. Mischkapsel nach einem der vorhergehenden Ansprüche, die als erste und/oder zweite Komponente eine Substanz enthält, gewählt aus Feststoffen und/oder Flüssigkeiten.

13. Verwendung einer Mischkapsel nach einem der vorhergehenden Ansprüche zur Herstellung von Dentalwerkstoffen.

14. Mischgerät enthaltend eine Mischkapsel nach einem der Ansprüche 1 bis 12.

## Claims

1. Mixer capsule, having a main chamber (18), which at one end is provided with a discharge spout (14) and at its other end is sealed by means of a piston (12), for holding a first component, an auxiliary chamber (17), which is provided in the piston (12), for holding a second component,
a body (20) which can move freely, and
a separating device (16) which separates the auxiliary chamber (17) from the main chamber (18), the body (20), when the separating device (16) is closed, being arranged in the main chamber (18), and the auxiliary chamber (17) and the body (20) being designed in such a way that, during the discharge operation, the body (20) can enter the auxiliary chamber (17) as a displacement body, **characterized in that** the separating device (16) is designed such that the body (20) can penetrate through it.

2. Mixer capsule according to Claim 1, in which the body (20) is spherical.

3. Mixer capsule according to Claim 2, in which the auxiliary chamber (17) is substantially in the shape of a hemisphere with a radius which is larger than that of the body (20).

4. Mixer capsule according to one of the preceding claims, in which the separating device (16) adheres to an annular surface (15), which delimits the auxiliary chamber (17), of the piston (12), and the transition between the annular surface (15) and the inner wall of the auxiliary chamber (17) has a sharp-edged region (21), and/or the transition between the annular surface (15) and the inner wall of the auxiliary chamber (17) is rounded in the remaining region (22).

5. Mixer capsule according to one of Claims 1 to 4, in which the separating device (16) has at least one desired breaking point.

6. Mixer capsule according to one of the preceding claims, in which the discharge spout (14) is fitted eccentrically to the main chamber (18).

7. Mixer capsule according to Claim 6, in which at least one channel (23), which opens into the discharge spout (14), is formed in that end wall of the main chamber (18) which is provided with the discharge spout (14).

8. Mixer capsule according to one of the preceding claims, in which the separating device (16) is designed as a cushion (24) for holding a third component.

9. Mixer capsule according to one of the preceding claims, in which the separating device (16) comprises at least one metal-containing foil and/or hydrocarbon-containing layers and/or ceramic barrier layers, such as SiOₓ layers.

10. Mixer capsule according to one of the preceding claims, in which the piston (12) comprises materials selected from metal, glass, ceramic or plastic, for example plastic-coated metal, glass and ceramic or metallized plastic.

11. Mixer capsule according to one of the preceding claims, in which the body (20) comprises materials selected from glass, ceramic, PTFE, for example plastic-coated metal or stainless steel.

12. Mixer capsule according to one of the preceding claims, which as the first and/or second component contains a substance selected from solids and/or liquids.

13. Use of the mixer capsule according to one of the preceding claims for producing dental materials.

14. Mixer unit including the mixer capsule according to one of Claims 1 to 12.

## Revendications

1. Capsule mélangeuse présentant une chambre principale (18) pourvue à l'une de ses extrémités d'un bec de sortie (14) rendue étanche par un piston (12) à son autre extrémité et destinée à recevoir un premier composant, une chambre secondaire (17) prévue dans le piston (12) destinée à recevoir un second composant, un corps (20) librement mobile et un dispositif de séparation (16) séparant la chambre secondaire (17) de la chambre principale (18), le corps (20) étant disposé dans la chambre principale (18) lorsque le dispositif de séparation (16) est fermé et la chambre secondaire (17) et le corps (20) étant conformés de façon que le corps (20) puisse pénétrer dans la chambre secondaire (17) en tant que corps de déplacement lors d'une opération de sortie, **caractérisée en ce que** le dispositif de séparation (16) est conformé de façon à pouvoir être perforé par le corps (20).

2. Capsule mélangeuse selon la revendication 1, dans laquelle le corps (20) est sphérique.

3. Capsule mélangeuse selon la revendication 2, dans laquelle la chambre secondaire (17) présente essentiellement la forme d'une hémisphère avec un plus grand rayon par rapport au corps (20).

4. Capsule mélangeuse selon l'une quelconque des revendications précédentes, dans laquelle le dispositif de séparation (16) adhère à une surface annulaire (15) du piston (12) délimitant la chambre secondaire (17), et la transition entre la surface annulaire (15) et la paroi interne de la chambre secondaire (17) présente une zone à bords tranchants (21) et/ou la transition entre la surface annulaire (15) et la paroi interne de la chambre secondaire (17) est arrondie dans la zone restante (22).

5. Capsule mélangeuse selon l'une quelconque des revendications 1 à 4, dans laquelle le dispositif de séparation (16) présente au moins une section de rupture intentionnellement prévue.

6. Capsule mélangeuse selon l'une quelconque des revendications précédentes, dans laquelle le bec de sortie (14) se situe de façon excentrique sur la chambre principale (18).

7. Capsule mélangeuse selon la revendication 6, dans laquelle au moins une rainure (23) débouchant dans le bec de sortie (14) est formée dans la paroi frontale de la chambre principale (18), pourvue du bec de sortie (14).

8. Capsule mélangeuse selon l'une quelconque des revendications précédentes, dans laquelle le dispositif de séparation (16) est conformé en tant que coussin (24) pour recevoir un troisième composant.

9. Capsule mélangeuse selon l'une quelconque des revendications précédentes, dans laquelle le dispositif de séparation (16) comprend au moins une feuille contenant du métal et/ou des couches contenant de l'hydrocarbure et/ou des couches barrière céramiques telles que des couches de SiOₓ.

10. Capsule mélangeuse selon l'une quelconque des revendications précédentes, dans laquelle le piston (12) contient des matériaux sélectionnés parmi du métal, du verre, de la céramique ou de la matière synthétique, par exemple du métal, verre ou céramique revêtu de matière synthétique ou de la matière synthétique métallisée.

11. Capsule mélangeuse selon l'une quelconque des revendications précédentes, dans laquelle le corps (20) contient des matériaux sélectionnés parmi du verre, de la céramique, du PTFE, par exemple du métal revêtu de matière synthétique ou de l'acier spécial.

12. Capsule mélangeuse selon l'une quelconque des revendications précédentes, qui contient comme premier et/ou second composant une substance sélectionnée parmi des substances solides et/ou liquides.

13. Utilisation d'une capsule mélangeuse selon l'une quelconque des revendications précédentes pour la fabrication de substances dentaires.

14. Mélangeur comprenant une capsule mélangeuse selon l'une quelconque des revendications 1 à 12.
